# EUROPEAN PATENT APPLICATION

(11) **EP 2 058 157 A1**
(43) Date of publication of application: **13.05.2009**
(21) Application number: 07791493.5
(22) Date of filing: 27.07.2007
(51) Int. Cl.: B60H 1/34, B60H 1/00

(54) **AIR CONDITIONER FOR VEHICLE**

(30) Priority: 23.08.2006 JP 2006227060
(71) Applicant: Calsonic Kansei Corporation, Saitama-shi Saitama 331-8501 (JP)
(72) Inventor: SANO, Masahiro c/o Calsonic Kansei Corporation, Saitama 331-8501 (JP)
(74) Representative: Grünecker, Kinkeldey, Stockmair & Schwanhäusser Anwaltssozietät
(86) International application number: PCT/JP2007/064799
(87) International publication number: WO 2008/023535

(57) **Abstract**

Defroster ducts (12R, 12L) includes a right defroster duct (12R) extending from a left side of a temperature control unit (11) toward a right side of a front window (FW) and a left defroster duct (12L) extending from a right side of the temperature control unit (11) toward a left side of the front window (FW). The right and left defroster ducts (12R, 12L) are arranged crossing each other.

## Description

### TECHNICAL FIELD

The present invention relates to a vehicular air conditioner and, more particularly, to a vehicular air conditioner having a good defrost performance for a front window.

### BACKGROUND ART

A conventional vehicular air conditioner has a temperature control unit and defroster ducts connected to the temperature control unit in an interior space of an instrument panel provided at the front side of the vehicular passenger compartment (for example, see Japanese Patent Application Laid-Open No. 11-236153).

The defroster ducts are formed with inlets and outlets such that the inlets are connected to the temperature control unit and the outlets are opened through a top wall of the instrument panel. The defroster ducts lead an air flowing from the temperature control unit to discharge toward the inner side of the front window, so as to defog the front window.

### DISCLOSURE OF THE INVENTION

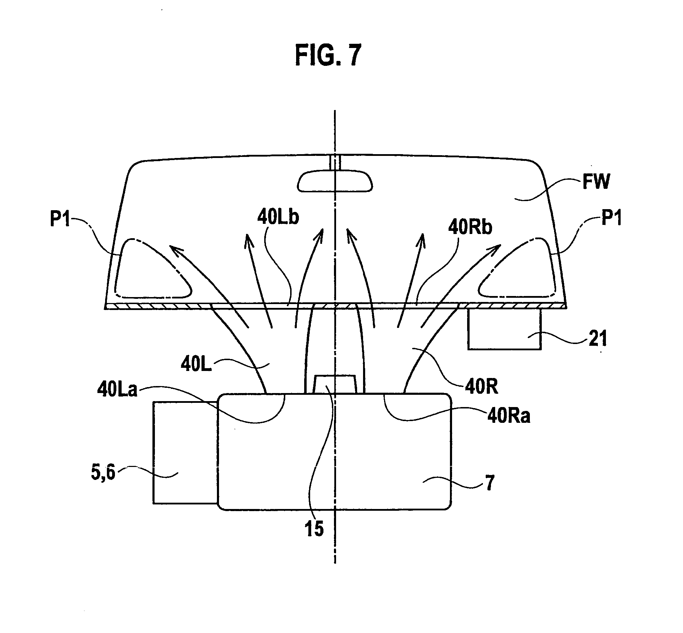

Recently, vehicular accessories (for example, a head-up display (HUD)) are often disposed in the front side of the top wall of the instrument panel, that is, in the front window side of the instrument panel. This structure narrow the space for the defroster ducts so that the outlets of the defroster ducts (corresponding to portions 40Rb and 40Lb in Fig. 7) cannot be disposed at the vehicular widthwise outside portions of the top wall of the instrument panel (see Fig. 7).

Thus, air discharged from the outlet of the defroster duct can not reach to the lower ends (corresponding to portions P1 in Fig. 7) of the left and right sides of the front window and this partially reduces the defrost performance.

The present invention is provided based on the described arts and an object of the present invention is to provide a vehicular air conditioner having a good defrost performance for the front window.

The first aspect of the present invention is a vehicular air conditioner including defroster ducts connected to a temperature control unit disposed in instrument panel at a front portion of a vehicular interior. The defroster ducts each has an outlet being opened through a top wall of the instrument panel at a front portion of the top wall, such that a temperature-controlled air from the temperature control unit is discharged from the defroster ducts toward a front window. The defroster ducts includes a right defroster duct extending from a left portion of the temperature control unit toward a left portion of the front window and a left defroster duct extending from a right portion of the temperature control toward a left portion of the front window, such that the right and left defroster ducts are arranged so as to cross each other.

The second aspect of the present invention is a vehicular air conditioner including a center defroster duct and side defroster ducts. The center defroster duct has an inlet connected to a temperature control unit disposed in an instrument panel at a front portion of a vehicular interior and an outlet being opened through a top wall of the instrument panel at a front portion of the top wall, such that a temperature-controlled air from the temperature control unit is discharged from the center defroster duct toward a front window. The side defroster ducts each has an inlet connected to the temperature control unit and an outlet being opened through front pillars disposed on each vehicular widthwise outside of the front window and oriented toward lower portions of widthwise outside portions of the front window, so as to discharge temperature controlled air from the temperature control unit toward the lower end portions of the widthwise outside portions of the front window.

### BRIEF DESCRIPTION OF THE DRAWINGS

[Fig. 1] Fig. 1 is a side view of a vehicle equipped with a vehicular air conditioner according to a first embodiment of the present invention.
[Fig. 2] Fig. 2 is a diagrammatic vertical sectional view of the entire structure of the vehicular air conditioner.
[Fig. 3] Fig. 3 is a top view of an instrument panel, seen along the arrow III in Fig. 2.
[Fig. 4] Fig. 4 is a view seen along the arrow IV in Fig. 2, showing a positional relationship between a defroster duct and a front window.
[Fig. 5] Fig. 5 is a view of a vehicular air conditioner according to a second embodiment of the present invention, corresponding to the view of Fig. 4.
[Fig. 6] Fig. 6 is a view enlarging a driver's seat side in the view of Fig. 5.
[Fig. 7] Fig. 7 is a view of a comparative example of a vehicular air conditioner, corresponding to the view of Fig. 4.

### BEST MODE FOR CURRYING OUT THE INVENTION

Vehicular air conditioners according to embodiments of the present invention will be described below with reference to the drawings.

### [First embodiment]

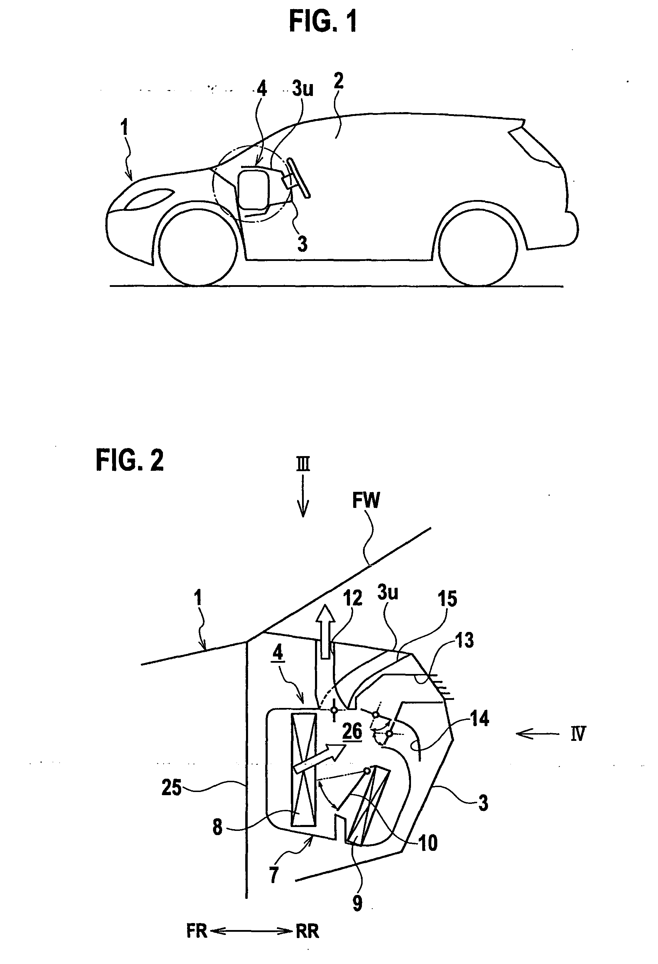

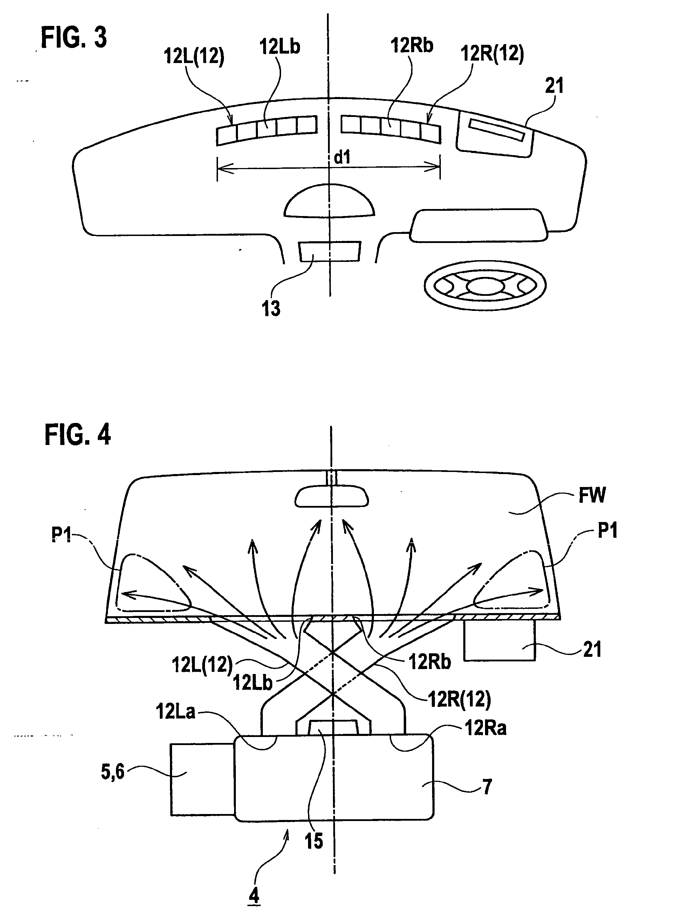

With reference to Figs. 1 to 4, a first embodiment of the present invention will be described. Fig. 1 is a diagrammatic view of a vehicle equipped with a vehicular air conditioner according to the first embodiment of the present invention. Fig. 2 is a diagrammatic view of the entire structure of the vehicular air conditioner. Fig. 3 is a top view of an instrument panel, seen along the arrow III in Fig. 2. Fig. 4 is a view seen along the arrow IV in Fig. 2, showing a positional relationship between a defroster duct and a front window.

As shown in Figs. 1 and 2, an instrument panel 3 is installed in a front part of a passenger compartment 2 of a vehicle 1. An air conditioning unit 4 is provided in an interior space defined by the instrument panel, that is, a space in front of the instrument panel 3 and in back of a dash panel.

As shown in Fig. 2, the air conditioning unit 4 includes an intake box 5 (see Fig. 4) formed with an inside air inlet and an outside air inlet and having an intake door attached thereto operable to open and close the air inlets, a blower unit 6 (see Fig. 4) connected to downstream of the intake box 5, a temperature control unit 7 connected to downstream of the blower unit 6 to discharge temperature-controlled air, and blow ducts 12, 13, 14 and 15 connected to downstream of the temperature control unit 7 and extending toward the passenger compartment 2.

The temperature control unit 7 accommodates a cooling heat exchanger 8 for cooling air, a heating heat exchanger 9 for heating air disposed leeward of the cooling heat exchanger 8, and a mixing door 10 disposed between the cooling heat exchanger 8 and the heating heat exchanger 9. The mixing door 10 controls an air flow ratio between an air flowing through the heating heat exchanger 9 and an air bypassing the heating heat exchanger 9 so as to control the air temperature.

On the leeward of the cooling heat exchanger 8 and the heating heat exchanger 9, an air mixing chamber 11 is provided to mix cool air from the cooling heat exchanger and hot air from the heating heat exchanger. On the leeward of the air mixing chamber 11, plural outlets are provided to connect the blow ducts 12, 13, 14 and 15 thereto. In vicinity of each outlet, blow mode doors are provided to open and close the outlets. The blow mode doors are opened and closed to select from which blow ducts 12, 13, 14, 15 temperature- controlled air is to be discharged into the passenger compartment.

The blow duct 12 is a defroster blow duct which discharges temperature-controlled air from the temperature control unit 7 toward the front window FW. The blow duct 13 is a bent blow duct which discharges temperature-controlled air from the temperature control unit 7 toward upper bodies of front passengers in the passenger compartment. The blow duct 14 is a foot blow duct which discharges temperature-controlled air from the temperature control unit 7 toward feet of the front passengers. The blow duct 15 is an upper bent duct which discharges temperature-controlled air from the temperature control unit 7 to rear passengers over the heads of the front passengers in the passenger compartment.

In this embodiment, a head-up display 21 serving as one of vehicular accessories is provided at a driver side portion of the top wall 3u of the instrument panel 3 as shown in Fig. 3. The head-up display 21 projects visual information required by the driver (for example, a running speed, an engine revolution rate, etc.) onto the front window FW. The visual information is shown within a field of the driver's front vision or in vicinity of the field of the driver's front vision and this reduces driver's head bobbing angle.

In this embodiment, the one of vehicular accessories (the head-up display 21) is provided at the front window side portion of the top wall 3u of the instrument panel 3, and this configuration shortens a width D1 of the outlets of the defroster duct 12 in the vehicular widthwise direction (see Fig. 3).

The defroster duct 12, as shown in Fig. 4, includes a right defroster duct 12R and a left defroster duct 12L. The defroster ducts 12R, 12L each has an inlet 12Ra, 12La connected to the temperature control unit 7. The right defroster duct 12R extends from a left side portion of the temperature control unit 7 toward a right side portion of the front window FW in the vehicular widthwise direction. The left defroster duct 12L extends from a right side portion of the temperature control unit 7 toward a left side portion of the front window FW in the vehicular widthwise direction. The right and left defroster ducts 12L, 12R are arranged so as to cross each other.

The defroster ducts 12R, 12L gradually expand in its width as the defroster ducts 12R, 12L extend from those lower ends (the inlets 12Ra, 12La) toward those upper ends (the outlets 12Rb, 12Lb), and the upper portions thereof sharply expand in width so as to form flared shapes.

Effects of the present embodiment will be listed.

According to the present embodiment, the defroster ducts 12R, 12L includes the right defroster duct 12R and the left defroster duct 12L. The right defroster duct 12R extends from the left side portion of the temperature control unit 7 toward the right side portion of the front window FW in a vehicular widthwise direction. The left defroster duct 12L extends from the right side portion of the temperature control unit 7 toward the left side portion of the front window FW in the vehicular widthwise direction. The right and left defroster ducts 12L, 12R are arranged crossing each other.

With this structure, the outlets 12Rb, 21Lb of the defroster ducts 12R, 12L can not be disposed at the vehicular widthwise outside portions of the instrument panel 3; however, air is discharged from the outlets 12Rb, 12Lb of the defroster ducts toward lower ends P1 (see the phantom lines in Fig. 4) of the vehicular widthwise outside portions of the front window FW at a steep angle. This prevents a bad defrost performance at the lower ends P1 of the vehicular widthwise outside portions of the front window FW.

A comparative example shown in Fig. 7 will be explained, which is not included in the present invention.

In the comparative example in Fig. 7, one of vehicular accessories ( a head-up display 21) is provided at a front portion of a vehicular widthwise outside portion of a top wall 3u of an instrument panel 3 such that outlets 40Rb, 40Lb of defroster ducts 40R, 40L are provided without interference with the vehicular accessories 21. The defroster ducts 40R, 40L include a right defroster duct 40R and a left defroster duct 40L such that the ducts 40R, 40L are disposed in parallel. In this comparative example in Fig. 7, air discharged from the outlets 40Rb, 40Lb of the defroster ducts can not reach lower ends P1 (see the phantom lines in Fig. 7) of vehicular widthwise outside portions of a front window FW, and this brings about a bad defrost performance at the lower ends P1 of vehicular widthwise outside portions of the front window FW.

In contrast, the present embodiment has the above-described right and left defroster ducts 12R, 12L which are disposed crossing each other. Therefore, even though the outlets 12Rb, 21Lb of the defroster ducts 12R, 12L are not disposed at the vehicular widthwise outside portions of the instrument pane 13, air is discharged from the outlets 12Rb, 21Lb of the defroster ducts toward the lower ends P1 (see the phantom lines in Fig. 4) of the vehicular widthwise outside portions of the front window FW at a steep angle. This prevents a bad defrost performance at the lower ends P1 of the vehicular widthwise outside portions of the front window FW.

### [Second embodiment]

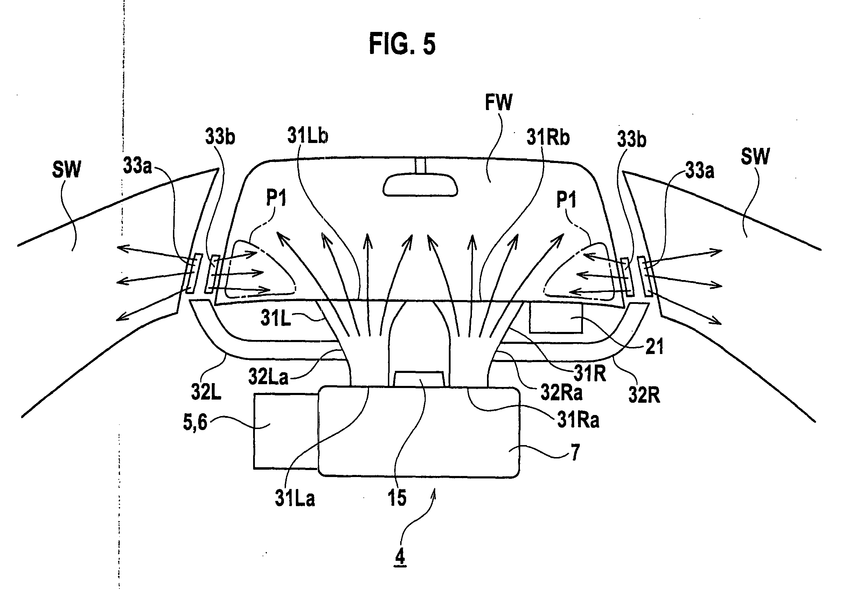

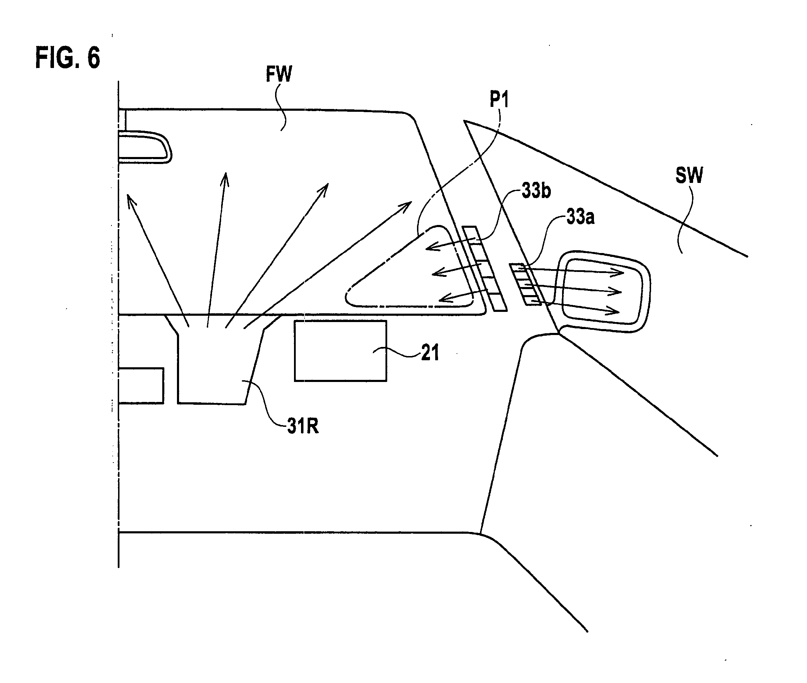

Next, a second embodiment will be described with reference to Figs. 5 and 6. In the embodiment described below, the same reference numerals and symbols will be used to designate the same elements as the elements described in the first embodiment, and redundant description for the elements and its effects will be omitted.

Fig. 5 is a view of a vehicular air conditioner according to the second embodiment of the present invention, showing a positional relationship between a defroster duct and a front window. Fig. 6 is a view enlarging a driver's seat side portion in the view of Fig. 5.

In the vehicular air conditioner of the second embodiment, defroster ducts include center defroster ducts 31R, 31L and the side defroster ducts 32R, 32L, and the ducts 31R, 31L 32R, 32L are arranged without crossing each other, unlike the first embodiment. The other configurations in the second embodiment are similar to those of the first embodiment. The details will be explained.

As shown in Fig. 5, the defroster ducts include a pair of center defroster ducts 31R, 31L arranged in parallel and a pair of the right and left side defroster ducts 32R, 32L arranged side by side in parallel.

The center defroster ducts 31 R, 31 L have inlets 31 Ra, 31 La connected to the temperature control unit 7 disposed at a vehicular widthwise center of an interior space of an instrument panel 3, and outlets 31Rb, 31Lb disposed at a vehicular widthwise center of the top wall 3u of the instrument panel 3. The center defroster ducts 31R, 31L are arranged side by side in parallel each other, and substantially vertically extend from those inlets 31Ra, 31 La to those outlets 31Rb, 31Lb.

The side defroster ducts 32R, 32L are connected to the temperature control unit 7 via the defroster ducts 31R. In particular, inlets 32Ra, 32La of the side defroster ducts 32R, 32L are connected to base portions (lower end portions) of the center defroster ducts 31R, 31L, and the side defroster ducts 32R, 32L extend toward vehicular widthwise outsides and are connected to front pillars 17 (which is also referred to as 'A-pillars') disposed on vehicular widthwise outsides of the front window FW. The front pillars are formed in a tubular shape and function as downstream portions of the side defroster ducts 32R, 32L. Lower end portions of the front pillars are formed with openings 33a, 33b that function as the outlets of the side defroster ducts 32R, 32L. The openings 33a, 33b includes first openings 33a opening toward side windows SW (door windows), that is, toward vehicular rear side, and second openings 33b opening toward the front window FW, that is, toward a vehicular widthwise center. The second openings 33b are obliquely downwardly oriented toward the vehicular widthwise center.

With this structure, when the blow mode is set to a defroster mode, temperature-controlled air from the temperature control unit 7 flows into the center defroster ducts 31R, 31L through the inlets 31Ra, 31La. Then, most of the temperature-controlled air flowing through the center defroster ducts 31R, 31L is discharged from the outlets 31 Rb, 31 Lb of the center defroster ducts 31R, 31 L and the rest is discharged from the lower end of the center defroster ducts 31 R, 31 L into the side defroster ducts 32R, 32L. The air flowing through the side defroster ducts 32R, 32L is discharged from those outlets, that is, the openings 33a, 33b formed at the front pillar 17.

The air discharged from the center defroster ducts 31R, 31L does not reach lower end portions P1 (see the phantom lines in Fig. 5) of vehicular widthwise outside portions of the front window FW, but the air discharged from the second openings 33b that function as the outlets of the side defroster ducts 32R, 32L reach the portions P1.

According to the second embodiment, even though the outlets 31Rb, 31Lb of the defroster ducts 31 R, 31 L are not disposed at the vehicular widthwise outside portions of the instrument panel 3, air is discharged from the outlet 33b of the side defroster ducts 32R, 32L toward the lower end portions P1 of the vehicular widthwise outside portions of the front window FW. Therefore, similarly to the first embodiment, the second embodiment prevents a bad defrost performance at the lower ends P1 of vehicular widthwise outside portions of the front window FW.

As described above, according to the present invention, even though the outlets of defroster ducts are not disposed at the vehicular widthwise outside portions of the instrument panel, air can be discharged toward the lower end portions of the vehicular widthwise outside portions of the front window. This prevents an inefficient defrost performance at the lower end portions of the vehicular widthwise outside portions of the front window.

The present invention is not limited to the above embodiments. Modification and variations of the embodiments can be made without departing from the sprit and scope of the present invention.

## Claims

1. A vehicular air conditioner comprising:
defroster ducts each having an inlet connected to a temperature control unit disposed in an instrument panel at a front portion of a vehicular interior, and an outlet being opened through a top wall of the instrument panel at a front portion of the top wall so as to discharge a temperature-controlled air from the temperature control unit toward a front window,
wherein the defroster ducts include a right defroster duct extending from a left portion of the temperature control unit toward a right portion of the front window and a left defroster duct extending from a right portion of the temperature control toward a left portion of the front window, such that the right and left defroster ducts are arranged so as to cross each other.

2. The vehicular air conditioner according to Claim 1, wherein one of vehicular accessories is provided at the front portion of the top wall of the instrument panel.

3. A vehicular air conditioner comprising:
a center defroster duct having an inlet connected to a temperature control unit disposed in an instrument panel at a front portion of a vehicular interior, and an outlet being opened through a top wall of the instrument panel at a front portion of the top wall so as to discharge a temperature-controlled air from the temperature control unit toward a front window; and
side defroster ducts each has an inlet connected to the temperature control unit and an outlet being opened through front pillars disposed on each vehicular widthwise outside of the front window and oriented toward lower portions of widthwise outside portions of the front window, so as to discharge the temperature-controlled air toward the lower portions of the widthwise outside portions of the front window.

4. The vehicular air conditioner according to Claim 3, wherein one of vehicular accessories is provided at the front portion of the top wall of the instrument panel.
